# EUROPEAN PATENT SPECIFICATION

(11) **EP 1 864 898 B1**
(45) Date of publication and mention of the grant of the patent: **22.05.2013**
(21) Application number: 07252318.6
(22) Date of filing: 08.06.2007
(51) Int. Cl.: B62K 11/10, B62K 25/28

(54) **Motorcycle**
Motorrad
Motocyclette

(30) Priority: 09.06.2006 JP 2006160440
(43) Date of publication of application: 12.12.2007
(73) Proprietor: Yamaha Hatsudoki Kabushiki Kaisha, Iwata-shi, Shizuoka-ken 438-8501 (JP)
(72) Inventor: Yamamoto, Yoshiaki, Iwata-shi Shizuoka-ken 438-8501 (JP); Aoyama, Atsushi, Iwata-shi Shizuoka-ken 438-8501 (JP)
(74) Representative: Moreland, David

(56) References cited:
- JP-A- 3 217 383
- JP-A- 4 292 291
- JP-A- 2001 097 269
- "TRAN SCOOTER" TRAN SCOOTER MAGAZINE, no. 30, November 2005 (2005-11), XP002598520 Japan

## Description

### FIELD OF THE INVENTION

The present invention relates to a motorcycle comprising a swing arm arranged on a unit swing type engine unit to support a rear wheel to make the same swingable vertically, and a muffler mounted to the swing arm.

### BACKGROUND TO THE INVENTION

For example, a starter type motorcycle provided with a unit swing type engine unit is proposed, in which a swing arm is mounted to one side of the engine unit, a rear wheel is arranged between rear portions of the swing arm and the engine unit, a muffler is mounted to the swing arm, and a rear suspension and a brake caliper for the rear wheel are arranged between the muffler and the swing arm. A typical arrangement is disclosed in prior art reference JP-A-2001-97269.

In the case where a rear suspension and a brake caliper are arranged between a swing arm and a muffler, as known in the art, there is caused a problem that the muffler projects outside a vehicle and a bank angle is decreased.

The invention has been thought of in view of the conventional situation described above and has among its objects to provide a motorcycle capable of suppressing outward projection of a muffler to increase a bank angle.

JP3217383 is considered to the closest prior art and discloses a motorcycle having a swing type engine unit. A muffler extends along one side of the engine unit. A piston suspension unit is mounted to a bracket of the main frame. The piston of the suspension unit is connected to the rear part of the engine via a C-shaped strut, and the entire suspension unit is positioned above the muffler.

### SUMMARY OF THE INVENTION

Various aspects of the present invention are defined in independent claim 1. Some preferred features are defined in the dependent claims.

Described herein is a motorcycle comprising:
a body frame;
an engine unit pivotally mounted on the body frame about a pivot shaft and arranged to swing vertically relative to the body frame, wherein the engine supports a rear wheel;
a muffler secured relative to the engine unit;
a suspension unit disposed between the engine unit and the body frame and positioned above the muffler; and
a brake caliper for the rear wheel, said caliper being positioned below the muffler.

The motorcycle, further comprising a swing arm, wherein a rear portion of the swing arm supports the rear wheel.

The suspension unit may be connected between the swing arm and the body frame such that the suspension unit is indirectly disposed between the engine unit and the body frame.

The front portion of the swing arm is connected to the engine.

The muffler is mounted on the swing arm.

The swing arm is formed with a recess adapted to avoid interference with an inner portion of the muffler.

The brake caliper is arranged rearwardly of that portion of the swing arm which supports the rear wheel.

The suspension may be arranged substantially horizontally in a longitudinal direction of the motorcycle to have a rear end thereof connected to an upper end of the swing arm.

The motorcycle may further comprise an exhaust pipe connected to the muffler, the exhaust pipe being arranged to pass outwardly laterally of the pivot shaft.

The engine unit may be formed with a lubricating oil injection port which is arranged rearwardly of the pivot shaft and inwardly of the exhaust pipe.

The engine unit may include a transmission case having a belt chamber and having the rear wheel supported on a rear portion thereof, and the swing arm may be arranged on that opposite side in a vehicle width direction of the rear wheel to the engine unit, on which the transmission case is arranged.

The swing arm is in the form of a substantially triangular-shaped flat plate, which is decreased in vertical dimension from a front side toward a rear side, and a front, upper end and a front, lower end of the swing arm are connected to the engine unit.

Also described herein is a motorcycle comprising a body frame, a unit swing type engine unit, a front portion of which is supported to be swingable vertically about a pivot shaft of the body frame, a swing arm, a front portion of which is connected to the engine unit and a rear portion of which supports a rear wheel, a suspension connected between the swing arm and the body frame, a muffler mounted to the swing arm, and a brake caliper for the rear wheel, and wherein the brake caliper for the rear wheel is arranged below the muffler and the suspension is arranged above the muffler.

With the motorcycle according to the invention, since the brake caliper is arranged below the muffler and the suspension is arranged above the muffler, the muffler becomes hard to interfere with the brake caliper and the suspension, so that it is possible to correspondingly arrange the muffler toward a center of a vehicle, thus enabling increasing a bank angle.

Also, since the suspension and the brake caliper are arranged above and below the muffler, it is possible to suppress influences by heat from the muffler.

### BRIEF DESCRIPTION OF THE DRAWINGS

These and other aspects of the present invention will now be described, by way of example only, with reference to the accompanying drawings, in which:

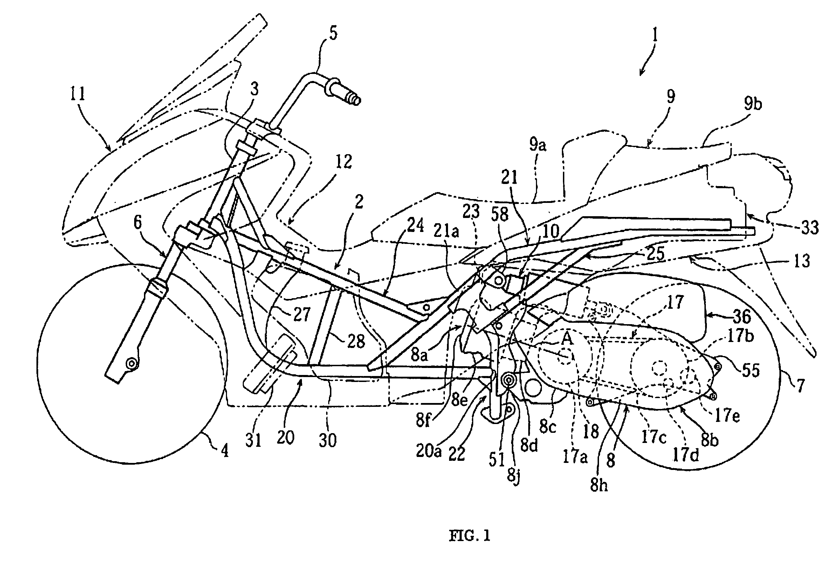

Fig. 1 is a side view showing a motorcycle according to an embodiment of the invention;
Fig. 2 is a plan view showing a body frame of the motorcycle;
Fig. 3 is a right, side view showing an engine unit mounted to the body frame;

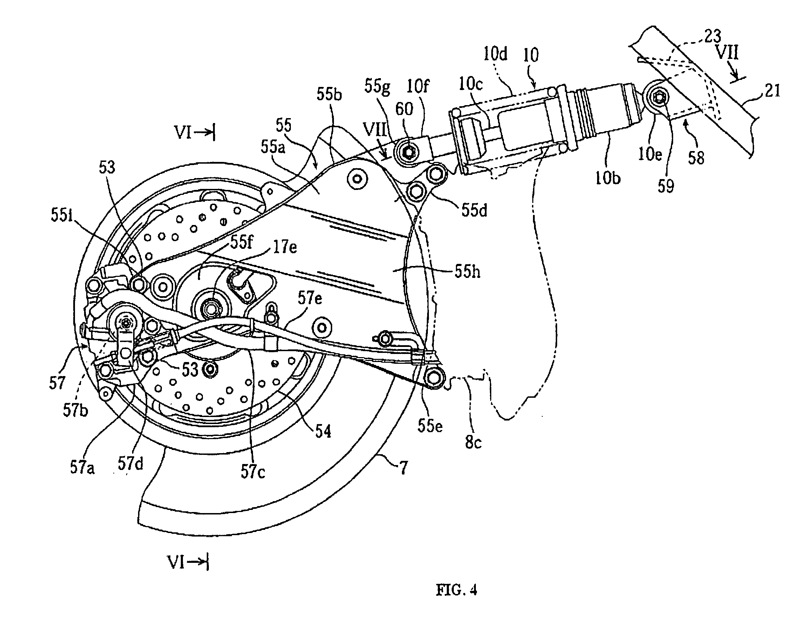

Fig. 4 is a right, side view showing a rear suspension and a swing arm of the engine unit;
Fig. 5 is a left, side view showing the rear suspension and the swing arm of the engine unit;
Fig. 6 is a cross sectional view taken along the line VI-VI in Fig. 4 and showing a cross section of the swing arm;

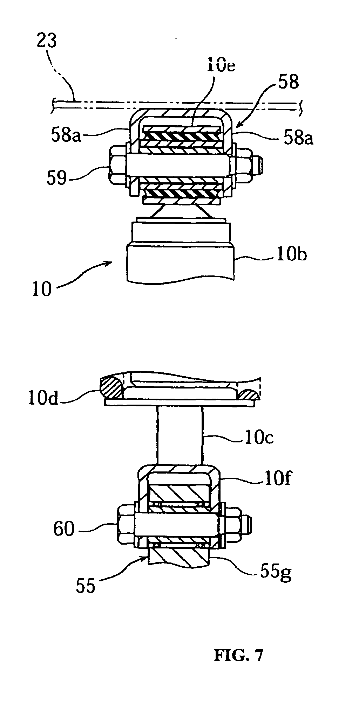

Fig. 7 is a cross sectional view taken along the line VII-VII in Fig. 4 and showing the rear suspension;

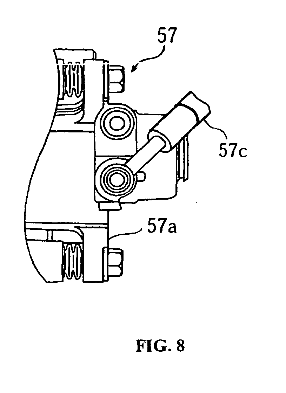

Fig. 8 is a rear view showing a brake caliper arranged on the swing arm;

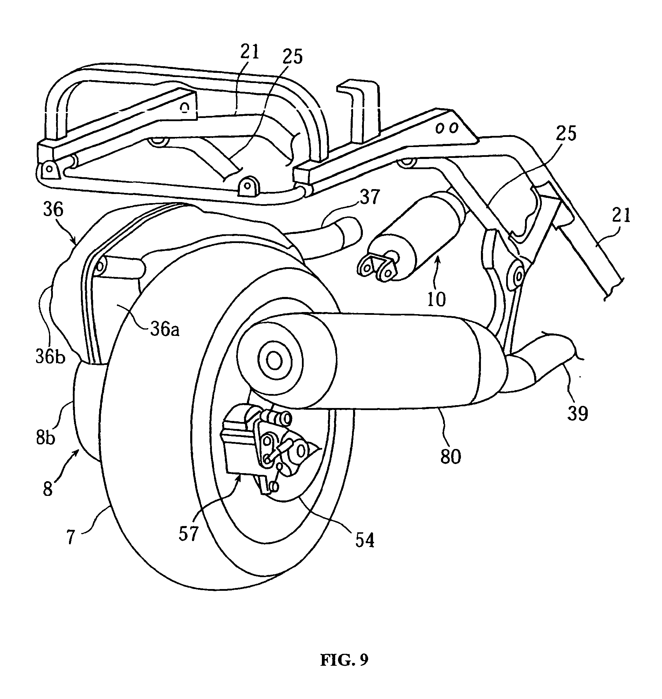

Fig. 9 is a rear view showing the positional relationship between the rear suspension and the muffler; and

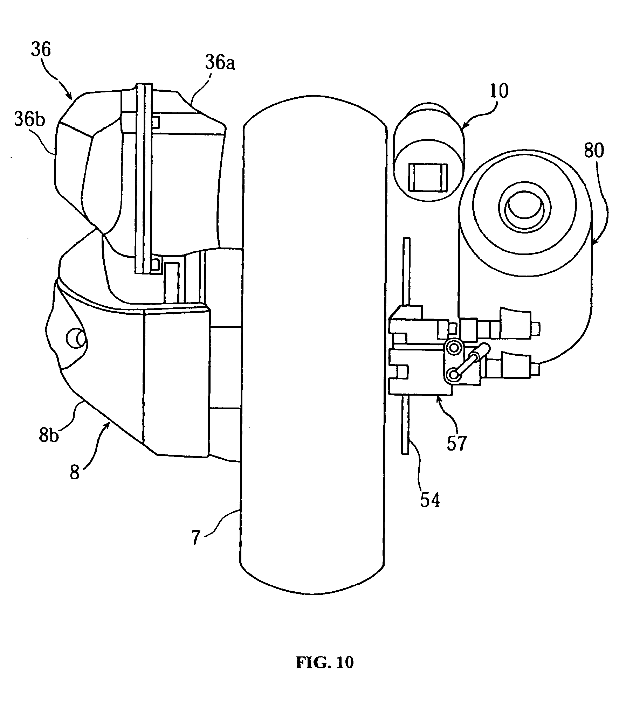

Fig. 10 is a perspective view showing the positional relationship between the rear suspension and the muffler.

### DETAILED DESCRIPTION OF THE DRAWINGS

It should be understood that front and rear, and left and right referred to in the description of the disclosed embodiment mean front and rear, and left and right as seen in a state of being seated on a seat of the motorcycle.

In the drawings, the reference numeral 1 denotes a starter type motorcycle. The motorcycle 1 comprises a body frame 2 with a head pipe 3 arranged at a front end thereof and a unit swing type engine unit 8 supported through a pivot shaft 51 on the body frame 2 to be swingable vertically. A rear wheel 7 is arranged at a rear end of the engine unit 8. The motorcycle 1 further comprises a swing arm 55, a front end of which is connected to the engine unit 8 and a rear end of which is connected to the rear wheel 7. A rear suspension 10 is connected to bridge the swing arm 55 and the body frame 2.

A front fork 6 supporting a front wheel 4 at a lower end thereof and a steering handle 5 at an upper end thereof is pivotally supported by the head pipe 3 to be steerable left and right. Also, a straddle-type seat 9 is mounted on the body frame 2 above the engine unit 8.

The seat 9 includes a main seat 9a and a tandem seat 9b formed separately from the main seat 9a. The tandem seat 9b is arranged in a higher location than the main seat 9a.

The front fork 6 has a front side thereof covered by a front cover 11 and a rear side thereof covered by a leg shield 12, and a lower periphery of the seat 9 is covered by a side cover 13.

The body frame 2 comprises a pair of left and right downtubes 20, 20 diverging outside from a lower end of the head pipe 3 in a vehicle width direction to extend rearward and then extending rearward and substantially horizontally from the lower end, a pair of left and right seat rails 21, 21 extending rearward and obliquely upward from centers of the left and right downtubes 20 in a longitudinal direction, a pair of left and right engine suspension frames 22, 22 which extends vertically from rear end surfaces 20a of the left and right downtubes 20 and has upper ends thereof connected to the seat rails 21, and a cross member 23 connecting between portions near to connections 21a of the engine suspension frames 22 of the left and right seat rails 21 in the vehicle width direction.

Also, the body frame 2 includes left and right upper tubes 24, 24 extending substantially straight and rearwardly, obliquely downward from the head pipe 3, and having rear end surfaces thereof connected to the seat rails 21, and left and right seat stays 25, 25 connecting between the left and right engine suspension frames 22 and rear portions of the seat rails 21.

Left and right pivot members 47 are arranged in the vicinity of connections of rear surfaces of the left and right engine suspension frames 22, 22 to the downtubes 20.

Longitudinally extending rectangular-shaped foot brackets 29, 29 are connected and bridged between the left and right downtubes 20 and the left and right seat rails 21.

Lower ends of the left and right engine suspension frames 22 are connected integrally by a lower side portion 22c extending in the vehicle width direction, and a main stand 45 is arranged on the lower side portion 22c to be supported to be able to turn between a use position and a storage position.

A fuel tank 30 is arranged in a space surrounded by the left and right downtubes 20 and the left and right upper tubes 24, and a radiator 31 is arranged below the fuel tank 30.

Also, an upwardly opened storage box 33 is arranged behind the fuel tank 30 in a space, which is surrounded by the left and right downtubes 20, the seat rails 21, and the engine suspension frames 22. The storage box 33 substantially extends over the total length of the seat 9 in the longitudinal direction, and the opening is covered by the seat 9 to be able to open and close.

With the engine unit 8, an engine body 8a and a transmission case 8b including a belt chamber, in which a V-belt continuously variable transmission 17 is accommodated, are joined integrally.

The engine body 8a is a water-cooled four-stroke single cylinder engine mounted with a cylinder axis A directed substantially horizontally and constructed such that a cylinder block 8d, a cylinder head 8e, and a head cover 8f are successively joined to a front mating surface of a crank case 8c, in which a crank shaft 18 arranged to be directed horizontally in the vehicle width direction is accommodated.

The transmission case 8b includes a case body 8g contiguous to a left end of the crank case 8c in the vehicle width direction to extend rearward, and a case cover 8h mounted detachably to a left mating surface of the case body 8g.

The V-belt continuously variable transmission 17 is constructed such that a drive pulley 17a arranged at a left end of the crank shaft 18 in the transmission case 8b, and a driven pulley 17b arranged at a rear end of the transmission case 8b are connected to each other by a V-belt 17c. A main shaft 17d, to which rotation of the driven pulley 17b is transmitted, and a drive shaft 17e are arranged in the transmission case 8b, and the rear wheel 7 is mounted to the drive shaft 17e.

Left and right supports 8j, 8j are formed on a lower wall of the crank case 8c to project forward. The left and right supports 8j, 8j are pivotally supported through the pivot shaft 51 by the pivot members 47 whereby the engine unit 8 is supported to be able to swing vertically about a lower portion of the crank case 8c.

An oil pan 8k is connected to a bottom mating surface of the crank case 8c. A lubricating oil injection port 8c' for injection of a lubricating oil into the oil pan 8k is formed on a right side wall of the crank case 8c to extend upward. A cooling water pump 82 is arranged at a rear, upper end of the right side wall of the crank case 8c.

An air cleaner 36 is arranged on an upper wall surface of the transmission case 8b. A longitudinal length of the air cleaner 36 is sized to substantially extend over the total length of the transmission case 8b. The air cleaner 36 is fixed to the transmission case 8b to comprise a cleaner body 36a fixed to the transmission case 8b and containing therein a filter (not shown), and a cleaner cover 36b mounted detachably to a left mating surface of the cleaner body 36a.

A downwardly opened suction port 36c is formed on the cleaner cover 36b and a discharge port 36d is formed inside a front wall of the cleaner body 36a. A throttle body 38 is connected through an intake pipe 37 to the discharge port 36d.

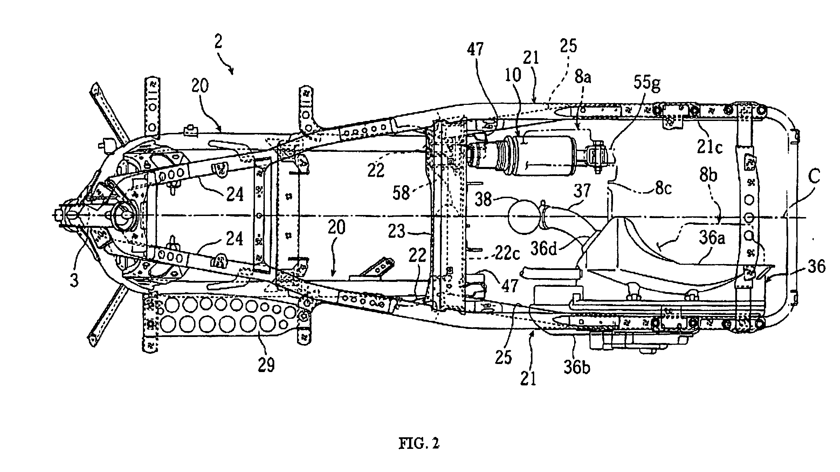

As shown in Fig. 2, the air cleaner 36 is arranged in a position offset leftward from a body center line C and the throttle body 38 is arranged on the body center line C as viewed in plan view. Also, the rear suspension 10 is arranged in a position offset rightward from the body center line C.

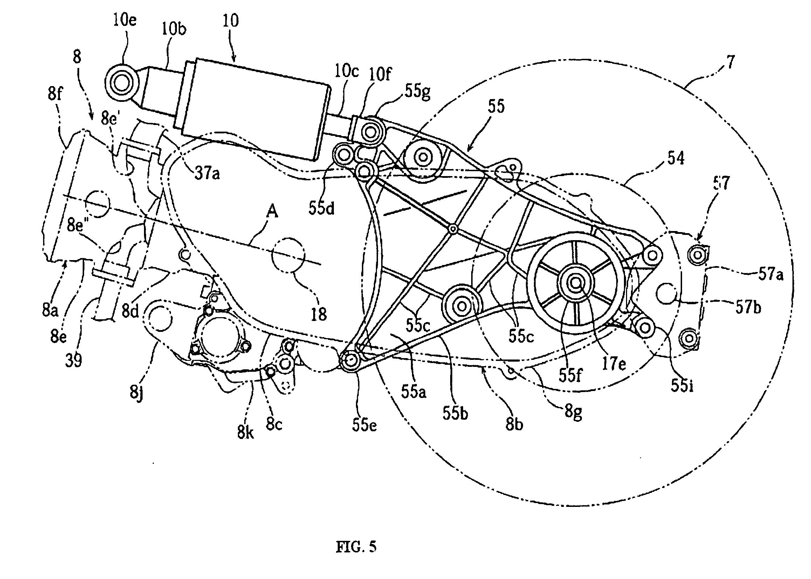

As shown in Fig. 5, an intake port 8e' is opened to an upper wall surface of the cylinder head 8e. The throttle body 38 is connected to the intake port 8e' through an intake manifold 37a.

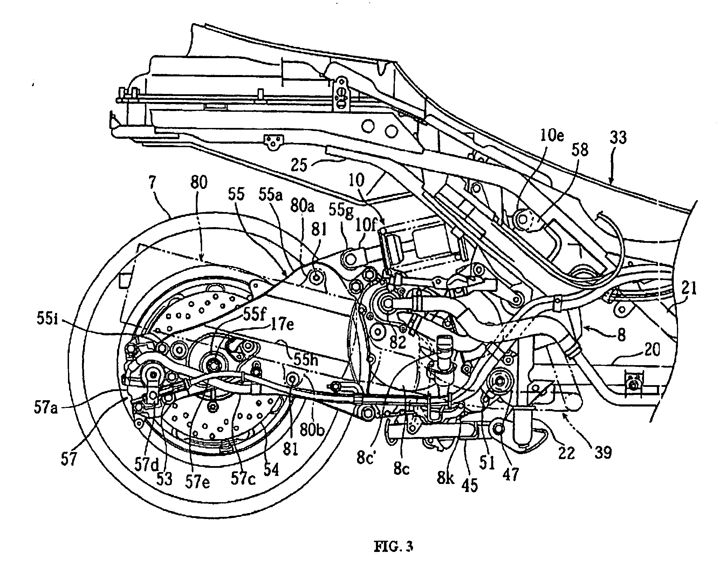

An exhaust port 8e" is opened to a lower wall surface of the cylinder head 8e. An exhaust pipe 39 is connected to the exhaust port 8e". As shown in Fig. 3, the exhaust pipe 39 extends downward from the exhaust port 8e" , extending rightward from a lower end thereof in the vehicle width direction, passing near to a lower side of the right downtube 20 and near to a front side of the engine suspension frame 22, and bending rearward to extend outside the engine suspension frame 22. Further, the exhaust pipe 39 passes below the pivot shaft 51 outside the engine suspension frame 22 to extend obliquely upward, and a muffler 80 is connected to a lower end of the exhaust pipe 39.

The lubricating oil injection port 8c' is arranged in the exhaust pipe 39 to be positioned above the exhaust pipe 39 and the cooling water pump 82 is arranged rearwardly upwardly of the lubricating oil injection port 8c'. Thereby, injection of the lubricating oil and maintenance of the cooling water pump 82 can be performed without removal of the muffler 80.

The muffler 80 is cylindrical-shaped to be arranged obliquely upward at substantially 15 degrees to an outer side of the swing arm 55. Upward and downward extending mounts 80a, 80b are formed at upper and lower edges of the muffler 80 and the muffler 80 is fixed to the swing arm 55 by clamping the respective mounts 80a, 80b to the swing arm 55 by means of bolts 81, 81 inserted from outside.

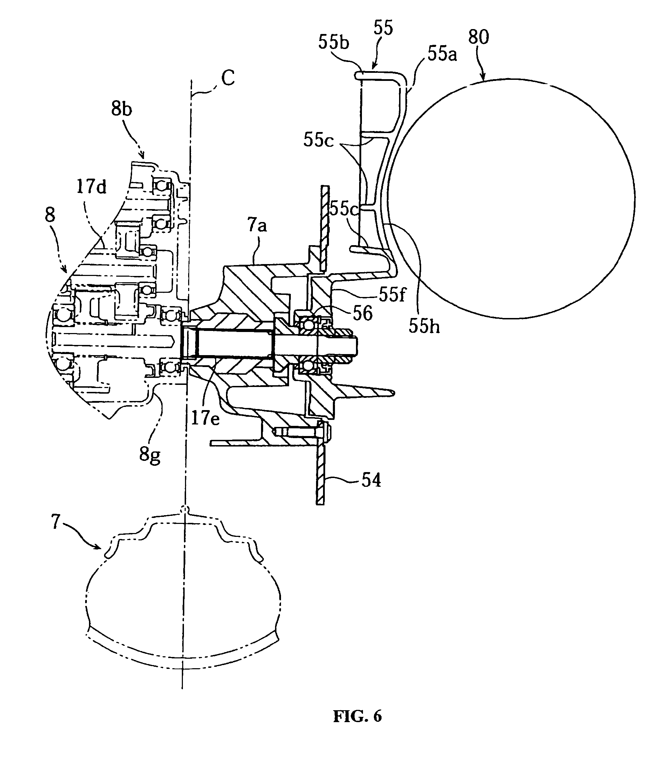

The swing arm 55 is arranged on an opposite side of the rear wheel 7 to the engine unit 8. The swing arm 55 includes an arm body 55a in the form of a substantially triangular-shaped flat plate, which is formed to have a vertical dimension decreasing from a front side toward a rear side, a flange portion 55b formed on an outer peripheral edge of the arm body 55a, and a lattice-shaped rib 55c connecting between the flange portion 55b and the arm body 55a (see Fig. 6) .

A concave recess 55h is formed generally centrally of the arm body 55a and extends in a generally vertical direction to be aligned with the muffler 80. The muffler 80 may therefore be arranged so that its inner portion is positioned in the recess 55h.

Upper and lower ends 55d, 55e of a front edge of the arm body 55a are, respectively, bolted and fixed to the crank case 8c. The drive shaft 17e is supported on a rear end 55f of the arm body 55a with a bearing 56 therebetween. The drive shaft 17e is supported doubly by the transmission case 8b and the swing arm 55 (see, for example, Fig. 6).

A hub portion 7a of the rear wheel 7 is joined to the drive shaft 17e to rotate therewith. A disk plate 54 is bolted and fixed to an outer side of the hub portion 7a.

A brake caliper 57 is arranged on the disk plate 54. The brake caliper 57 is fixed to a rear edge 55i rearwardly of the rear end 55f of the swing arm 55, which supports the rear wheel 7, by means of bolts 53, 53.

The brake caliper 57 includes a caliper body 57a fixed to the rear edge 55i, left and right pistons 57b, 57b arranged in the caliper body 57a to be opposed to the disk plate 54, and a brake hose 57c connected to the caliper body 57a to supply a hydraulic pressure to the pistons 57b. When a rider performs a braking operation, the hydraulic pressure causes the pistons 57b to pressingly interpose the disk plate 54 through pads (not shown).

Also, a length of parking cable 57e is connected to the pistons 57b through a lever 57d. When a parking operation is performed, the lever 57d is turned by the parking cable 57e to push the pistons 57b to mechanically lock the disk plate 54.

The rear suspension 10 is arranged between the swing arm 55 and the cross member 23 to be directed substantially horizontally in the longitudinal direction of a vehicle. The rear suspension 10 is arranged above the engine unit 8 and substantially parallel to the cylinder axis A of the engine unit 8.

The rear suspension 10 includes a cylinder 10b, a piston (not shown) arranged slidably in the cylinder 10b, a piston rod 10c connected to the piston, and a coil spring 10d arranged between the piston rod 10c and the cylinder 10b to bias the both 10b, 10c in a direction of extension.

The cylinder 10b is pivotally connected to a bracket 58 joined to the cross member 23 through an elastic bush 10e. Also, a C-shaped bracket 10f is connected to the piston rod, the bracket 10f being pivotally connected to a boss 55g formed on an upper side of the upper end 55d of the swing arm 55.

The rear suspension 10 is arranged above the muffler 80 of the swing arm 55 and the brake caliper 57 is arranged below the muffler 80 of the swing arm 55. Also, as viewed from laterally, the rear suspension 10 is arranged forwardly of the rear end 55f of the swing arm 55, which supports the rear wheel 7, and the brake caliper 57 is arranged rearwardly of the rear end 55t. Further, the brake caliper 57 projects rearwardly of the rear edge 55i of the swing arm 55.

According to the present embodiment, since the muffler 80 is mounted to the outer side wall of the swing arm 55, the brake caliper 57 is arranged below the muffler 80 of the swing arm 55, and the rear suspension 10 is arranged above the muffler, the muffler 80 does not interfere with the rear suspension 10 and the brake caliper 57, so that it is possible to arrange the muffler 80 toward a center of a vehicle, thus enabling correspondingly decreasing a vehicle width dimension and increasing a bank angle.

Also, since the rear suspension 10 and the brake caliper 75 are arranged in positions distant from the muffler 80, it is possible to suppress influences by heat from the muffler 80.

According to the present embodiment, since the swing arm 55 is formed with the recess 55h, in which the inner portion of the muffler 80 is positioned, it is possible to arrange the muffler 80 further toward the center of the vehicle, thus permitting further increase in the available bank angle.

Furthermore, since the brake caliper 57 is arranged rearwardly of the rear end 55f of the swing arm 55, which supports the rear wheel 7, it is possible to arrange the brake caliper 57 in a level near to an axle of the rear wheel 7. This arrangement permits a greater achievable bank angle as compared with the case where a brake caliper is arranged below a rear wheel axle.

According to the exemplary embodiment, since the rear suspension 10 is arranged and directed substantially horizontally in the longitudinal direction, it is possible to lower a seat level as compared with the case where a rear suspension is arranged and directed vertically.

According to the disclosed embodiment, since the exhaust pipe 39 is arranged to pass outwardly laterally of the pivot shaft 51 from the engine suspension frame 22, it is possible to arrange the exhaust pipe 39 making effective use of an empty space disposed rightwardly laterally of the engine unit 8.

Since the lubricating oil injection port 8c' is arranged rearwardly of the pivot shaft 51 and inside the exhaust pipe 39, it is possible to arrange the lubricating oil injection port 8c' making effective use of an empty space above the exhaust pipe 39, thus enabling facilitating the work of injection of the lubricating oil.

According to the present embodiment, since the swing arm 55 is arranged on the opposite side of the rear wheel 7 to the engine unit 8, the rear wheel 7 can be supported on either side by the swing arm 55 and the engine unit 8, thus enabling heightening the rear wheel 7 in supporting stiffness against a load from a road surface.

According to the disclosed embodiment, since the swing arm 55 is in the form of a substantially triangular-shaped flat plate, which is decreased in vertical dimension from a front side toward a rear side, the upper end 55d and the lower end 55e of the swing arm 55 are fixed to the engine unit 8, and the rear wheel 7 is supported by the rear end 55f, it is possible to minimize the necessary dimension of the swing arm 55 a necessity minimum while ensuring the supporting stiffness of the rear wheel 7.

### Description of Reference Numerals and Signs

1: motorcycle
2: body frame
7: rear wheel
8: unit swing type engine unit
8c': lubricating oil injection port
10: rear suspension
39: exhaust pipe
51: pivot shaft
55: swing arm
55d: front, upper end
55e: front, lower end
55f: rear end (rear wheel support)
55h: recess
57: brake caliper
80: muffler

## Claims

1. A motorcycle (1) comprising:
a body frame (2);
an engine unit (8) pivotally mounted on the body frame (2) about a pivot shaft (51) and arranged to swing vertically relative to the body frame (2), wherein the engine unit (8) supports a rear wheel (7);
a muffler (80) secured relative to the engine unit (8);
a suspension unit (10) disposed between the engine unit (8) and the body frame (2) such that the entire suspension unit is positioned above the muffler (80); and
a brake caliper (57) for the rear wheel (7), said caliper (57) being positioned below the muffler (80); wherein
the motorcycle (1) further comprising a swing arm (55), and a rear portion of the swing arm (55) supports the rear wheel (7), wherein a piston of the suspension unit (10) is pivotably connected to a boss (55g) formed on an upper side of the upper end of the swing arm (55) and the brake caliper (57) is fixed to a rear edge of the swing arm (55), rearwardly of the part of the swing arm (55) that supports the rear wheel (7);
the muffler (80) is mounted on the swing arm (55), wherein the swing arm (55) is formed with a recess (55h) adapted to avoid interference with an inner portion of the muffler (80); and
the swing arm (55) is in the form of a substantially triangular-shaped flat plate, which is decreased in vertical dimension from a front side toward a rear side, and a front, upper end and a front, lower end of the swing arm (55) are connected to the engine unit (8).

2. The motorcycle (1) of claim 1, wherein the suspension unit (10) is connected between the swing arm (55) and the body frame (2) such that the suspension unit (10) is indirectly disposed between the engine unit (8) and the body frame (2).

3. The motorcycle (1) of claim 1 or 2, wherein a front portion of the swing arm (55) is connected to the engine unit (8).

4. The motorcycle (1) according to any preceding claim, wherein the brake caliper (57) is arranged rearwardly of that portion of the swing arm (55) which supports the rear wheel (7).

5. The motorcycle (1) according to any preceding claim, wherein the suspension unit (10) is arranged substantially horizontally in a longitudinal direction of the motorcycle (1) to have a rear end thereof connected to an upper end of the swing arm (55).

6. The motorcycle (1) according to any preceding claim, further comprising an exhaust pipe (39) connected to the muffler (80), the exhaust pipe (39) being arranged to pass outwardly laterally of the pivot shaft (51).

7. The motorcycle (1) according to claim 6, wherein the engine unit (8) is formed with a lubricating oil injection port (8c') arranged rearwardly of the pivot shaft (51) and inwardly of the exhaust pipe (39).

8. The motorcycle (1) according to any of the preceding claims, wherein the engine unit (8) includes a transmission case (8b) having a belt chamber and having the rear wheel (7) supported on a rear portion thereof, and the swing arm (55) is arranged on that opposite side in a vehicle width direction of the rear wheel (7) to the engine unit (8), on which the transmission case (8b) is arranged.

9. A motorcycle (1) according to claim 1, wherein
the engine unit is a unit swing type engine unit (8), a front portion of which is supported to be swingable vertically about a pivot shaft (51) of the body frame (2), and wherein the motorcycle comprises a swing arm (55), a front portion of which is connected to the engine unit (8) and a rear portion of which supports a rear wheel (7), and wherein
the suspension (10) is connected between the swing arm (55) and the body frame (2), the muffler (80) is mounted to the swing arm (55).

## Patentansprüche

1. Motorrad (1), das aufweist:
ein Karosseriegerippe (2);
eine Motoranlage (8), die drehbar am Karosseriegerippe (2) um eine Drehwelle (51) montiert und angeordnet ist, um vertikal relativ zum Karosseriegerippe (2) zu schwingen, wobei die Motoranlage (8) ein Hinterrad (7) trägt;
einen Abgasschalldämpfer (80), der relativ zur Motoranlage (8) befestigt ist;
eine Aufhängung (10), die zwischen der Motoranlage (8) und dem Karosseriegerippe (2) angeordnet ist, so dass die gesamte Aufhängung über dem Abgasschalldämpfer (80) positioniert ist; und
einen Bremssattel (57) für das Hinterrad (7), wobei der Bremssattel (57) unterhalb des Abgasschalldämpfers (80) positioniert ist; wobei
das Motorrad (1) außerdem einen Schwingarm (55) aufweist und ein hinterer Abschnitt des Schwingarmes (55) das Hinterrad (7) trägt, wobei ein Kolben der Aufhängung (10) drehbar mit einer Nabe (55g) verbunden ist, die auf einer oberen Seite des oberen Endes des Schwingarmes (55) ausgebildet ist, und wobei der Bremssattel (57) an einem hinteren Rand des Schwingarmes (55) befestigt ist, nach hinten von dem Teil des Schwingarmes (55), der das Hinterrad (7) trägt;
wobei der Abgasschalldämpfer (80) am Schwingarm (55) montiert ist, wobei der Schwingarm (55) eine Aussparung (55h) aufweist, die ausgebildet ist, um eine Störung mit einem inneren Abschnitt des Abgasschalldämpfers (80) zu vermeiden; und
wobei der Schwingarm (55) in der Form einer im Wesentlichen dreieckig geformten flachen Platte vorliegt, die in der vertikalen Abmessung von einer Vorderseite in Richtung einer Hinterseite kleiner wird, und wobei ein vorderes oberes Ende und ein vorderes unteres Ende des Schwingarmes (55) mit der Motoranlage (8) verbunden sind.

2. Motorrad (1) nach Anspruch 1, bei dem die Aufhängung (10) zwischen den Schwingarm (55) und das Karosseriegerippe (2) geschaltet ist, so dass die Aufhängung (10) indirekt zwischen der Motoranlage (8) und dem Karosseriegerippe (2) angeordnet ist.

3. Motorrad (1) nach Anspruch 1 oder 2, bei dem ein vorderer Abschnitt des Schwingarmes (55) mit der Motoranlage (8) verbunden ist.

4. Motorrad (1) nach einem der vorhergehenden Ansprüche, bei dem der Bremssattel (57) nach hinten von jenem Abschnitt des Schwingarmes (55) angeordnet ist, der das Hinterrad (7) trägt.

5. Motorrad (1) nach einem der vorhergehenden Ansprüche, bei dem die Aufhängung (10) im Wesentlichen horizontal in einer Längsrichtung des Motorrades (1) angeordnet ist, damit ein hinteres Ende davon mit einem oberen Ende des Schwingarmes (55) verbunden ist.

6. Motorrad (1) nach einem der vorhergehenden Ansprüche, das außerdem ein Auspuffrohr (39) aufweist, das mit dem Abgasschalldämpfer (80) verbunden ist, wobei das Auspuffrohr (39) so angeordnet ist, dass es nach außen seitlich von der Drehwelle (51) vorbeigeht.

7. Motorrad (1) nach Anspruch 6, bei dem die Motoreinheit (8) mit einer Schmieröleinspritzöffnung (8c') ausgebildet ist, die nach hinten von der Drehwelle (51) und nach innen vom Auspuffrohr (39) angeordnet ist.

8. Motorrad (1) nach einem der vorhergehenden Ansprüche, bei dem die Motoranlage (8) ein Getriebegehäuse (8b) mit einer Riemenkammer umfasst, und wobei das Hinterrad (7) auf einem hinteren Abschnitt davon getragen wird, und wobei der Schwingarm (55) auf jener zur Motoranlage (8) entgegengesetzten Seite in einer Fahrzeugbreitenrichtung des Hinterrades (7) angeordnet ist, auf der das Getriebegehäuse (8b) angeordnet ist.

9. Motorrad (1) nach Anspruch 1, bei dem
die Motoranlage eine Schwingmotoranlage (8) ist, wobei ein vorderer Abschnitt davon so getragen wird, das er vertikal um eine Drehwelle (51) des Karosseriegerippes (2) schwingen kann, und wobei das Motorrad einen Schwingarm (55) aufweist, dessen vorderer Abschnitt mit der Motoranlage (8) verbunden ist, und dessen hinterer Abschnitt ein Hinterrad (7) trägt, und wobei
die Aufhängung (10) zwischen den Schwingarm (55) und das Karosseriegerippe (2) geschaltet und der Abgasschalldämpfer (80) am Schwingarm (55) montiert ist.

## Revendications

1. Motocycle (1), comprenant:
un châssis de carrosserie (2) ;
une unité de moteur (8), montée de manière pivotante sur le châssis de la carrosserie (2) autour d'un arbre de pivotement (51), et destinée à osciller verticalement par rapport au châssis de la carrosserie (2), l'unité de moteur (8) supportant une roue arrière (7) ;
un silencieux (80) fixé par rapport à l'unité de moteur (8) ;
une unité de suspension (10), agencée entre l'unité de moteur (8) et le châssis de la carrosserie (2), de sorte que l'ensemble de l'unité de suspension est positionné au-dessus du silencieux (80) ; et
un étrier de frein (57) pour la roue arrière (7), ledit étrier (57) étant positionné au-dessous du silencieux (80), dans lequel
le motocycle (1) comprend en outre un bras oscillant (55), une partie arrière du bras oscillant (55) supportant la roue arrière (7), un piston de l'unité de suspension (10) étant connecté de manière pivotante à un bossage (55g) formé sur un côté supérieur de l'extrémité supérieure du bras oscillant (55), et l'étrier de frein (57) étant fixé sur un bord arrière du bras oscillant (55), vers l'arrière de la partie du bras oscillant (55) qui supporte la roue arrière (7) ;
le silencieux (80) est monté sur le bras oscillant (55), le bras oscillant (55) comportant un évidement (55h), adapté pour empêcher une interférence avec une partie interne du silencieux (80) ; et
le bras oscillant (55) a la forme d'une plaque plate de forme pratiquement triangulaire, dont la dimension verticale est réduite d'un côté avant vers un côté arrière, une extrémité supérieure avant et une extrémité inférieure avant du bras oscillant (55) étant connectées à l'unité de moteur (8).

2. Motocycle (1) selon la revendication 1, dans lequel l'unité de suspension (10) est connectée entre le bras oscillant (55) et le châssis de la carrosserie (2), de sorte que l'unité de suspension (10) est agencée indirectement entre l'unité de moteur (8) et le châssis de la carrosserie (2).

3. Motocycle (1) selon les revendications 1 ou 2, dans lequel une partie avant du bras oscillant (55) est connectée à l'unité de moteur (8).

4. Motocycle (1) selon l'une quelconque des revendications précédentes, dans lequel l'étrier de frein (57) est agencé vers l'arrière de la partie du bras oscillant (55) qui supporte la roue arrière (7).

5. Motocycle (1) selon l'une quelconque des revendications précédentes, dans lequel l'unité de suspension (10) est agencée de manière pratiquement horizontale dans une direction longitudinale du motocycle (1), une extrémité arrière de celle-ci étant ainsi connectée à une extrémité supérieure du bras oscillant (55).

6. Motocycle (1) selon l'une quelconque des revendications précédentes, comprenant en outre un tuyau d'échappement (39) connecté au silencieux (80), le tuyau d'échappement (39) étant configuré de sorte à passer vers l'extérieur de l'arbre de pivotement (51) et latéralement par rapport à celui-ci.

7. Motocycle (1) selon la revendication 6, dans lequel l'unité de moteur (8) comporte un orifice d'injection d'huile de lubrification (8c'), agencé vers l'arrière de l'arbre de pivotement (51) et vers l'intérieur du tuyau d'échappement (39).

8. Motocycle (1) selon l'une quelconque des revendications précédentes dans lequel l'unité de moteur (8) englobe un boîtier de transmission (8b), comportant une chambre de courroie, la roue arrière (7) étant supportée sur une partie arrière de celle-ci, et le bras oscillant (55) étant agencé sur le côté de la roue arrière (7), dans une direction de la largeur du véhicule, opposé à l'unité de moteur (8), sur laquelle est agencé le boîtier de transmission (8b).

9. Motocycle (1) selon la revendication 1, dans lequel
l'unité de moteur est une unité de moteur du type oscillant (8), sa partie avant étant supportée de sorte à pouvoir osciller verticalement autour d'un arbre de pivotement (51) du châssis de la carrosserie (2), le motocycle comprenant un bras oscillant (55), dont une partie avant est connectée à l'unité de moteur (8), sa partie arrière supportant une roue arrière (7), et dans lequel
la suspension (10) est connectée entre le bras oscillant (55) et le châssis de la carrosserie (2), le silencieux (80) étant monté sur le bras oscillant (55).
